# EUROPÄISCHE PATENTSCHRIFT

(11) **EP 1 281 463 B1**
(45) Veröffentlichungstag und Bekanntmachung des Hinweises auf die Patenterteilung: **17.09.2008**
(21) Anmeldenummer: 02405624.4
(22) Anmeldetag: 19.07.2002
(51) Int. Cl.: B23B 51/04, B23C 5/22

(54) **Bohrkrone**
Core bit
Trépan de forage

(30) Priorität: 01.08.2001 DE 10137747
(43) Veröffentlichungstag der Anmeldung: 05.02.2003
(73) Patentinhaber: HILTI Aktiengesellschaft, 9494 Schaan (LI)
(72) Erfinder: Blessing, Matthias, 6820 Frastanz (AT); Wanger, Werner, 9493 Mauren (LI)
(74) Vertreter: Wildi, Roland

(56) Entgegenhaltungen:
- DE-U- 29 701 684
- US-A- 1 391 097
- DATABASE WPI Section PQ, Week 198930, 30. Oktober 1998 (1998-10-30) Derwent Publications Ltd., London, GB; Class P54,Page 4, AN 1989-218648 XP002214965 & SU 1 433 650 A (KRASILNIKOV A M), 30. Oktober 1988 (1988-10-30)

## Beschreibung

### Rotierendes, spanabhebendes Werkzeug

Die Erfindung betrifft ein rotierendes, spanabhebendes Werkzeug gemäss dem Oberbegriff des Patentanspruchs 1.

Aus der US 3 308 689 ist ein rotierendes, spanabhebendes Werkzeug mit einem rohrförmigen Trägerbereich bekannt, der an seiner bohrrichtungsseitigen Stirnseite mehrere, von der Stirnseite ausgehende, sich teilweise über den Trägerbereich in Richtung Aufnahmebereich erstreckende Ausnehmungen aufweist. In jeder dieser Ausnehmungen ist jeweils ein aus einem harten Werkstoff gebildetes Schneidelement festlegbar. Die Festlegung jedes Schneidelementes erfolgt mit Hilfe einer parallel zur Mittellängsachse des Trägerbereichs versetzbaren Spannschraube. Diese durchsetzt eine Durchgangsbohrung des Schneidelementes und ist in eine Gewindebohrung des Trägerbereichs eindrehbar, bis ein Kopf der Spannschraube in einem erweiterten Bereich der Durchgangsbohrung an dem Schneidelement und das Schneidelement an dem Trägerbereich anliegt.

Die das Schneidelement durchsetzende Durchgangsbohrung schwächt das gesamte Schneidelement, so dass mit diesem Schneidelement insbesondere sehr harte Untergründe nicht bearbeitet werden können. Zudem muss das Schneidelement deutlich breiter sein als der Kopf der Spannschraube.

Aus der US 1,391,097 A ist ein rotierendes, spanabhebendes Werkzeug mit einem scheibenförmigen Trägerbereich bekannt, der an einer von einem Aufnahmebereich beabstandeten Stirnseite mehrere von der Stirnseite ausgehende, sich teilweise über den Trägerbereich in Richtung des Aufnahmebereichs erstreckende Ausnehmungen aufweist. In den Ausnehmungen ist jeweils ein Schneidelement mit Hilfe eines an der Stirnseite des Trägerbereiches angeordneten Spannelementes festlegbar, das im Wesentlichen parallel zur Erstreckung der Ausnehmungen versetzbar ist. Jede Ausnehmung weist eine in Rotationsrichtung weisende erste Spannfläche und eine entgegen der Rotationsrichtung weisende zweite Spannfläche auf, die sich an segmentförmigen Abschnitten des Trägerbereichs befinden und von den Spannelementen zueinander bewegbar sind.

Der Erfindung liegt die Aufgabe zugrunde, ein rotierendes, spanabhebendes Werkzeug zu schaffen, mit dem sich sehr harte Untergründe bearbeiten lassen und bei dem die Schneidelemente sehr schnell, einfach sowie zuverlässig gewechselt werden können, sicher von dem Trägerbereich gehalten werden und hohen Belastungen standhalten.

Die Lösung dieser Aufgabe erfolgt durch ein rotierendes, spanabebendes Werkzeug, welches die im Patentanspruch 1 angeführten Merkmale aufweist.

Die erfindungsgemässe mechanische Festklemmung der Schneidelemente an dem Trägerbereich gestattet einen einfachen, zuverlässigen und sehr schnellen Wechsel der Schneidelemente. Die entgegen der Rotationsrichtung des Werkzeugs weisende Spannfläche des segmentförmigen Abschnittes leitet die von der Spannschraube erzeugten Spannkräfte grossflächig als Druckspannungen auf die Schneidelemente. Dadurch kommt es im Betrieb nicht zu Spannungserhöhungen und Bruch der Schneidelemente. Die vollflächig sowie spielfrei auf dem Schneidelement aufliegende Spannfläche verhindert, dass sich abgetragenes Material zwischen dem Schneidelement und der Spannfläche verklemmen kann.

Die Anschlagfläche dient der Aufnahme der Hautpschnittkräfte und die parallel zur Erstreckung der Ausnehmungen auf die Schneidelemente einwirkenden Kräfte werden von einem Anschlag aufgenommen, der von dem Grund der Ausnehmungen gebildet ist. Durch die Freilegung wird eine Beschädigung der zweiten Schneide verhindert. Der segmentförmige Abschnitt ist durch ein elastisches Biegegelenk mit dem restlichen Teil des Trägerbereichs einstückig verbunden.

Eine schnelle Verstellung des Spannelementes von einer das Schneidelement freigebenden Freigabestellung in eine das Schneidelement klemmende Klemmstellung oder umgekehrt wird vorzugsweise dadurch erreicht, indem das Spannelement von einer Spannschraube gebildet ist, die in eine, im wesentlichen parallel zur Erstreckung der Ausnehmungen erstreckende Gewindebohrung des Trägerbereichs ragt. Die Spannschraube ist mittels eines geeigneten Werkzeugs sicher und schnell verdrehbar. Die Drehmitnahmemittel der Spannschraube sind beispielsweise als Innensechskant oder als Torx ausgeführt.

Beim Festklemmen des Schneidelementes in einer der Ausnehmungen wird der segmentförmige Abschnitt zum Schneidelement bewegt und das Schneidelement gegen eine in Rotationsrichtung weisende, vom Trägerbereich gebildete, starre Anschlagfläche gedrückt. Die Bewegung des segmentförmigen Abschnitts erfolgt dabei zweckmässigerweise beim Eindrehen der Spannschraube in die Gewindebohrung mit einem sich in Bohrrichtung erweiternden Bereich der Spannschraube und/oder einem sich in Bohrrichtung verjüngenden, der Spannschraube zugewandten Bereich des segmentförmigen Abschnittes. Dabei ist der sich in Bohrrichtung erweiternde Bereich der Spannschraube von einem, eine konische Aussenkontur aufweisenden Kopf der Spannschraube gebildet. Dieser sich in Bohrrichtung erweiternde Bereich der Spannschraube wird beispielsweise von der konischen Aussenkontur eines Kopfes der Spannschraube gebildet. Die Ausnehmungen und die segmentartigen Abschnitte können sich beispielsweise in Bezug auf eine sich von der Stirnseite zum Aufnahmebereich erstreckenden Richtung unter einem Winkel erstrecken. Auf diese Weise lassen sich unterschiedliche Freiwinkel und Spanwinkel der in den Ausnehmungen festklemmbaren Schneidelemente erreichen.

Ein der guten Spanabfuhr dienender Spanraum kann für die einzelnen Schneidelemente zur Verfügung gestellt werden, indem sich zweckmässigerweise auf einer der starren Anschlagfläche gegenüberliegenden Seite an die Ausnehmung eine von der Stirnseite ausgehende Vertiefung anschliesst, deren Erstreckung in Rotationsrichtung grösser ist als der Abstand zwischen der Spannschraube und der Spannfläche.

Damit die Spannfläche einerseits soweit wie möglich an die Schneidkante geführt werden kann, andererseits das abgetragene Material gut und zuverlässig von der Schneidkante abgeführt werden kann, nimmt zweckmässigerweise die von der Stirnseite aus gemessene Tiefe der Vertiefung in Rotationsrichtung zu. Die Zunahme der Tiefe erfolgt dabei insbesondere nur in einem Bereich der sich zwischen der Spannschraube und der Spannfläche erstreckt.

Der Abstand zwischen der in Bearbeitungsrichtung weisende Stirnseite des Kopfes der Spannschraube und der Stirnseite des Werkzeugs entspricht im befestigten Zustand der Spannschraube im wesentlichen der grössten Tiefe der Vertiefung. Auf diese Weise wird sichergestellt, dass der Kopf der Spannschraube die Abfuhr des abgetragenen Materials nicht behindert.

Damit mit dem Werkzeug Bohrungen mit einem grossen Durchmesser in den Untergrund gebohrt werden können, ist der Trägerbereich des rotierenden Werkzeugs vorzugsweise rohrförmig ausgebildet. Die Stirnseite des Werkzeugs wird dabei von dem, dem Aufnahmebereich abgewandten Endbereich des Trägerbereichs gebildet. Die Abfuhr des abgetragenen Materials wird beispielsweise erheblich verbessert, wenn der Aufnahmebereich an seiner Innenseite und/oder an seiner Aussenseite mit wenigstens einer entsprechenden Wendel versehen sind.

Die Schneidelemente sind in der Weise angeordnet, dass sie die Stirnseite des Trägerbereiches in Bohrrichtung sowie die Innenseite und die Aussenseite des Trägerbereiches überragen. Mit den Schneidelementen wird ein Freischneiden erreicht und ein Verklemmen der Bohrkrone verhindert. Die Schneidelemente können beispielsweise die Innenseite des Trägerbereichs mehr überragen als die Aussenseite desselben.

Bei der Verwendung des erfindungsgemässen Werkzeugs in einem Bohrgerät mit integrierter oder externer Absaugvorrichtung ist darauf zu achten, dass ein ausreichend grosser Saugstrom vorhanden ist, mit dem das abgetragene Material beispielsweise aus dem Innern des rohrförmigen Trägerbereichs abgesaugt werden kann. Wenn mit dem Werkzeug eine Bohrung erstellt wird, kann von aussen angesaugte Luft nur durch die, von der Stirnseite des Aufnahmebereiches ausgehenden Vertiefungen in das Innere des Aufnahmebereiches gelangen. Um das Volumen des Saugstromes vergrössern zu können, weist der Aufnahmebereich wenigstens eine den Trägerbereich durchsetzende Öffnung auf, die in einer im wesentlichen senkrecht zur Rotationsrichtung verlaufenden Richtung hinter wenigstens einer Ausnehmung angeordnet ist.

Aus herstelltechnischen Gründen ist die Öffnung von einem sich direkt an die Ausnehmung anschliessenden Längsschlitz gebildet, dessen Erstreckung in Rotationsrichtung kleiner ist als die Erstreckung der Ausnehmung.

Vorzugsweise ist der Trägerbereich scheibenförmig ausgebildet, wobei die Stirnseite von der kreisförmigen Aussenkontur des Trägerbereichs gebildet ist.

Die in dem erfindungsgemässen Werkzeug zum Einsatz gelangenden Schneidelemente können eine einzelne, zwei einander gegenüberliegende oder vier Schneiden aufweisen. Jene Schneidelemente mit einer oder zwei Schneiden können eine rechteckige Grundform aufweisen. Die Schneidelemente mit vier Schneiden besitzen eine quadratische Grundform.

Die Schneidelemente, die bei dem erfindungsgemässen Werkzeug Verwendung finden, setzen sich beispielsweise aus einer polykristallinen Diamantschicht (PCD) und einer Hartmetallschicht zusammen.

Die Erfindung wird anhand von Zeichnungen, die ein Ausführungsbeispiel wiedergeben, näher erläutert. Es zeigen:
- Fig.1: ein erfindungsgemässes Werkzeug mit einem rohrförmigen Trägerbereich;
- Fig. 2: eine vergrösserte Darstellung des in Fig. 1 mit dem Bezugszeichen A bezeichneten Ausschnittes;
- Fig. 3: einen vergrösserten Ausschnitt eines weiteren erfindungsgemässen Werkzeugs mit einem scheibenförmigen Trägerbereich.

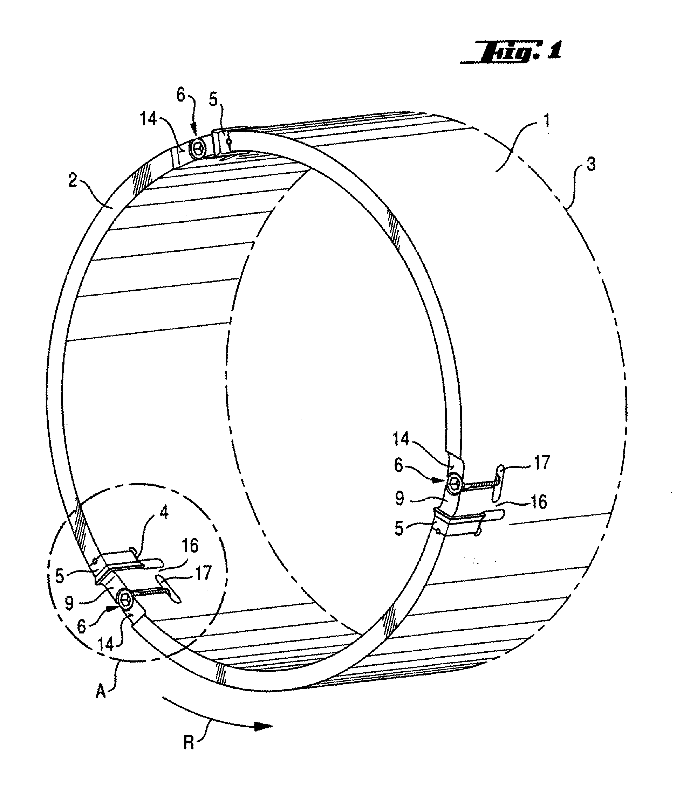

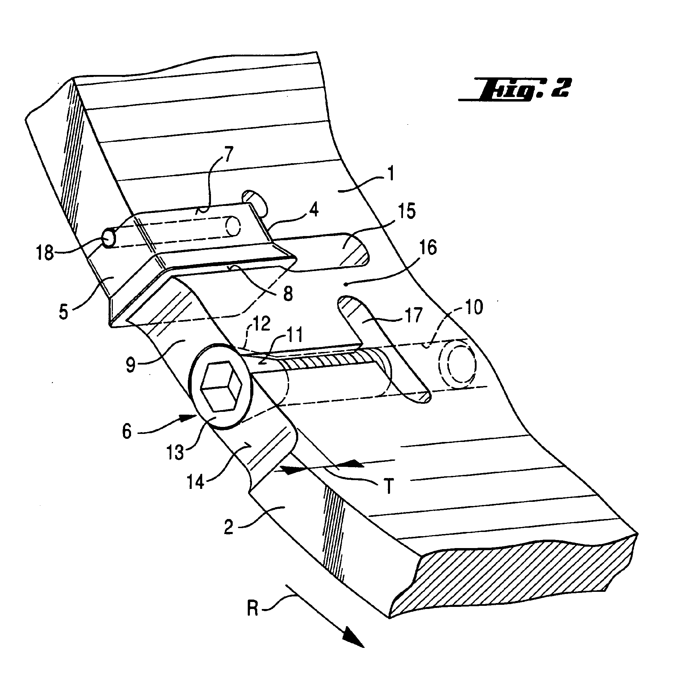

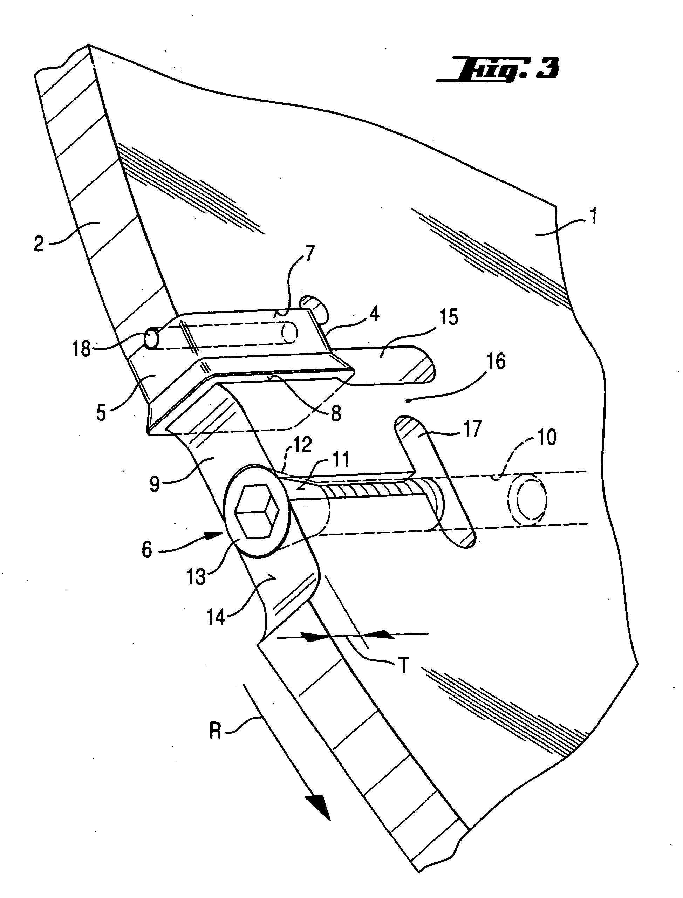

Bei dem in den Fig. 1 und 2 dargestellten erfindungsgemässen Werkzeug handelt es sich um eine Bohrkrone und die Fig. 3 bezieht sich auf ein Kreissägeblatt. Aus Gründen der Einfachheit werden sowohl für die Bohrkrone als auch für das Kreissägeblatt einheitliche Bezugszeichen verwendet.

Die in den Fig. 1 bis 3 dargestellten, rotierenden, spanabhebenden Werkzeuge weisen einen Aufnahmebereich 3 und einen Trägerbereich 1 mit einer von dem Aufnahmebereich beabstandeten Stirnseite 2 auf. Von dieser Stirnseite 2 aus erstrecken sich mehrere Ausnehmungen 4 teilweise über den Trägerbereich 1 in Richtung Aufnahmebereich 3. In jeder dieser Ausnehmungen 4 ist jeweils ein Schneidelement 5 mit Hilfe eines im wesentlichen parallel zur Erstreckung der Ausnehmung 4 versetzbaren Spannelementes in Form einer Spannschraube 6 festlegbar. Jede Ausnehmung 4 weist eine in Rotationsrichtung weisende, vom Trägerbereich 1 gebildete, starre Anschlagfläche 7 für das Schneidelement 5 und eine entgegen der Rotationsrichtung R weisende, mit dem Schneidelement 5 und eine entgegen der Rotationsrichtung R weisende, mit dem Schneidelement 5 zusammenwirkende Spannfläche 8 auf. Diese Spannfläche befindet sich an einem segmentförmigen Abschnitt 9 des Trägerbereiches 1 und ist von der Spannschraube 6 entgegen der Rotationsrichtung R bewegbar. Die Spannschraube 6 ragt in eine im wesentlichen parallel zur Erstreckung der Ausnehmungen 4 erstreckende Gewindebohrung 10 des Trägerbereiches 1.

Die Bewegung des segmentförmigen Abschnittes 9 erfolgt beim Eindrehen der Spannschraube 6 in die Gewindebohrung 10 mit dem Kopf 13 der Spannschraube 6, die einen sich in Bohrrichtung erweiternden Bereich 11 in Form einer konischen Aussenkontur aufweist, der mit einem sich in Bohrrichtung verjüngenden Bereich 12 des segmentförmigen Abschnitts 9 zusammenwirkt.

Auf einer der starren Anschlagfläche 7 gegenüberliegenden Seite schliesst sich an die Ausnehmung 4 eine von der Stirnseite 2 ausgehende Vertiefung 14 an, deren Erstreckung in Rotationsrichtung R grösser ist als der Abstand zwischen der Spannschraube 6 und der Spannfläche 8. Die von der Stirnseite 2 aus gemessene Tiefe T der Vertiefung 14 nimmt zwischen der Ausnehmung 4 und der Spannschraube 6 in Rotationsrichtung R zu.

Der Aufnahmebereich 3 sowie der Trägerbereich 1 des in den Fig. 1 und 2 dargestellten Werkzeugs sind rohrförmig ausgebildet. Die Stirnseite 2 wird von dem freien Ende des Trägerbereiches 1 gebildet, das von den Schneidelementen 5 in Bohrrichtung überragt wird. Der Trägerbereich 1 ist mit mehreren Öffnungen 15 versehen, wobei sich jeweils eine Öffnung 15 in einer parallel zur Längserstreckung des Werkzeugs verlaufenden Richtung an die Ausnehmung 4 anschliesst. Jede Öffnung 15 ist als Längsschlitz ausgebildet, dessen Erstreckung in Rotationsrichtung R kleiner ist als die Erstreckung der Ausnehmung 4. Die zur Öffnung 15 umfänglich benachbarte Ausnehmung 17 bildet zwischenliegend ein über die Spannschraube 6 elastisch deformierbares Gelenk 16 aus.

Der Trägerbereich 1 sowie der Aufnahmebereich 3 des in Fig. 3 dargestellten Werkzeugs sind scheibenförmig ausgebildet. Die Stirnseite 2 wird von der kreisförmigen Aussenkontur des Trägerbereichs 1 gebildet.

Damit gegebenenfalls auftretende Querkräfte das Schneidelement nicht seitlich - senkrecht zur Erstreckungsrichtung der Ausnehmung 4 - aus der Ausnehmung 4 drücken können, ist ein Formschluss zwischen dem Schneidelement 5 und der starren Anschlagfläche 7 und/oder dem Schneidelement 5 und der Spannfläche 8 vorgesehen. Der in den Fig. 2 und 3 dargestellte Formschluss wird beispielsweise mit Hilfe eines zylindrischen Stiftes 18 erreicht, der in jeweils eine entsprechende Vertiefung am Schneidelement 5 und der starren Anschlagfläche 7 ragt.

## Patentansprüche

1. Rotierendes, spanabhebendes Werkzeug mit einem einen Aufnahmebereich (3) und eine vom Aufnahmebereich (3) beabstandete Stirnseite (2) aufweisenden Trägerbereich (1), der mehrere von der Stirnseite (2) ausgehende, sich teilweise über den Trägerbereich (1) in Richtung Aufnahmebereich (3) erstreckende Ausnehmungen (4) aufweist,
in denen jeweils ein Schneidelement (5) mit Hilfe eines an der Stirnseite (2) des Trägerbereichs (1) angeordneten und im wesentlichen parallel zur Erstreckung der Ausnehmungen (4) versetzbaren Spannelementes festlegbar ist,
wobei jede Ausnehmung (4) eine entgegen der Rotationsrichtung (R) weisende, mit dem Schneidelement (5) zusammenwirkende Spannfläche (8) aufweist, die sich an einem segmentförmigen Abschnitt (9) des Trägerbereichs (1) befindet, und vom Spannelement entgegen der Rotationsrichtung (R) bewegbar ist, **dadurch gekennzeichnet, dass**
jede Ausnehmung (4) eine in Rotationsrichtung weisende, vom Trägerbereich (1) gebildete, starre Anschlagfläche (7) für das Schneidelement (5) aufweist.

2. Werkzeug nach Anspruch 1, **dadurch gekennzeichnet, dass** das Spannelement von einer Spannschraube (6) gebildet ist, die in eine, im wesentlichen parallel zur Erstreckung der Ausnehmungen (4) erstreckende Gewindebohrung (10) des Trägerbereichs (1) ragt.

3. Werkzeug nach Anspruch 1 oder 2, **dadurch gekennzeichnet, dass** die Bewegung des segmentförmigen Abschnittes (9) beim Eindrehen der Spannschraube (6) in die Gewindebohrung (10) mit einem sich in Bohrrichtung erweiternden Bereich (11) der Spannschraube (6) und/oder einem sich in Bohrrichtung verjüngenden, der Spannschraube (6) zugewandten Bereich (12) des segmentförmigen Abschnittes (9) erfolgt.

4. Werkzeug nach Anspruch 3, **dadurch gekennzeichnet, dass** der sich in Bohrrichtung erweiternde Bereich (11) der Spannschraube (6) von einem, eine konische Aussenkontur aufweisenden Kopf (13) der Spannschraube (6) gebildet ist.

5. Werkzeug nach einem der Ansprüche 1 bis 4, **dadurch gekennzeichnet, dass** sich auf einer der starren Anschlagfläche (7) gegenüberliegenden Seite an die Ausnehmung (4) eine von der Stirnseite (2) ausgehende Vertiefung (14) anschliesst, deren Erstreckung in Rotationsrichtung (R) grösser ist als der Abstand zwischen der Spannschraube (6) und der Spannfläche (8).

6. Werkzeug nach Anspruch 5, **dadurch gekennzeichnet, dass** die von der Stirnseite (2) aus gemessene Tiefe (T) der Vertiefung (14) zwischen der Ausnehmung (4) und der Spannschraube (6) in Rotationsrichtung (R) zunimmt.

7. Werkzeug nach einem der Ansprüche 1 bis 6, **dadurch gekennzeichnet, dass** der Trägerbereich (1) rohrförmig ausgebildet ist, wobei die Stirnseite (2) von dem, dem Aufnahmebereich (3) abgewandten Endbereich des Trägerbereichs (1) gebildet ist.

8. Werkzeug nach einem der Ansprüche 1 bis 7, **dadurch gekennzeichnet, dass** der Trägerbereich (1) wenigstens eine den Trägerbereich (1) durchsetzende Öffnung (15) aufweist, die in einer im wesentlichen senkrecht zur Rotationsrichtung (R) verlaufenden Richtung hinter wenigstens einer Ausnehmung (4) angeordnet ist.

9. Werkzeug nach Anspruch 8, **dadurch gekennzeichnet, dass** die Öffnung (15) von einem sich direkt an die Ausnehmung (4) anschliessenden Längsschlitz gebildet ist, dessen Erstreckung in Rotationsrichtung (R) kleiner ist als die Erstreckung der Ausnehmung (4).

10. Werkzeug nach einem der Ansprüche 1 bis 6, **dadurch gekennzeichnet, dass** der Trägerbereich (1) scheibenförmig ausgebildet ist, wobei die Stirnseite (2) von der kreisförmigen Aussenkontur des Trägerbereichs (1) gebildet ist.

## Claims

1. Rotating cutting tool comprising a carrier region (1) having a mounting region (3) and an end face (2) spaced from the mounting region (3), said carrier region (1) having a plurality of recesses (4) which extend, starting from the end face (2), partially over the carrier region (1) in the direction towards the mounting region (3), in each of which recesses a cutting element (5) can be fixed with the aid of a clamping element which is arranged on the end face (2) of the carrier region (1) and is displaceable substantially parallel to the extent of the recesses (4), wherein each recess (4) has a clamping surface (8) facing opposed to the rotation direction (R), which cooperates with the cutting element (5) and is situated on a segment-shaped section (9) of the carrier region (1) and can be moved by the clamping element against the rotation direction (R), **characterised in that** each recess (4) has a rigid stop surface (7) for the cutting element (5), said stop surface facing in the rotation direction and being formed by the carrier region (1).

2. Tool according to claim 1, **characterised in that** the clamping element comprises a clamping screw (6) which extends into a threaded bore (10) of the carrier region (1) substantially parallel to the extent of the recesses (4).

3. Tool according to claim 1 or 2, **characterised in that** when the clamping screw (6) is turned into the threaded bore (10) the movement of the segment-shaped section (9) is achieved with a region (11) of the clamping screw (6) which widens in the boring direction and/or with a region (12) of the segment-shaped section (9) facing towards the clamping screw (6) which narrows in the boring direction.

4. Tool according to claim 3, **characterised in that** the region (11) of the clamping screw (6) which widens in the boring direction is formed by a head (13) of the clamping screw (6) which has a conical outer contour.

5. Tool according to one of the claims 1 to 4, **characterised in that** a depression (14) which extends from the end face (2) on a side opposing the rigid stop surface (7) adjoins the recess (4), the extent of said depression being greater in the rotation direction (R) than the distance between the clamping screw (6) and the clamping surface (8).

6. Tool according to claim 5, **characterised in that** the depth (T) of the depression (14) measured from the end face (2) increases in the rotation direction (R) between the recess (4) and the clamping screw (6).

7. Tool according to one of the claims 1 to 6, **characterised in that** the carrier region (1) is formed tube-shaped, wherein the end face (2) is formed by the end region of the carrier region (1) facing away from the mounting region (3).

8. Tool according to one of the claims 1 to 7, **characterised in that** the carrier region (1) has at least one opening (15) which penetrates the carrier region (1) and which is arranged in a direction running substantially perpendicularly to the rotation direction (R) behind at least one recess (4).

9. Tool according to claim 8, **characterised in that** the opening (15) is formed by a longitudinal slot directly adjoining the recess (4), the extent of said slot being smaller than the extent of the recess (4) in the rotation direction (R).

10. Tool according to one of the claims 1 to 6, **characterised in that** the carrier region (1) is formed disk-shaped, wherein the end face (2) is formed by the circular outer contour of the carrier region (1).

## Revendications

1. Outil rotatif d'enlèvement de copeaux, comprenant une zone de support (1) qui comporte une zone de raccord (3) et une face frontale (2) distante de la zone de support (1) et qui est pourvue de plusieurs évidements (4), lesquels partent de la face frontale (2) et s'étendent partiellement sur la zone de support (1) en direction de la zone de raccord (3), un élément de coupe (5) pouvant être immobilisé dans chacun desdits évidements à l'aide d'un élément de serrage disposé sur la face frontale (2) de la zone de support (1) et déplaçable sensiblement parallèlement à l'extension des évidements (4), chaque évidement (4) comportant une surface de serrage (8) qui est orientée à l'opposé de la direction de rotation (R), qui coopère avec l'élément de coupe (5), qui se trouve sur une portion en forme de segment (9) de la zone de support (1) et qui est déplaçable par l'intermédiaire de l'élément de serrage à l'opposé de la direction de rotation (R), **caractérisé en ce que** chaque évidement (4) comporte, pour l'élément de coupe (5), une surface de butée rigide (7) formée par la zone de support (1) et orientée dans la direction de rotation.

2. Outil selon la revendication 1, **caractérisé en ce que** l'élément de serrage est formé par une vis de serrage (6) qui pénètre dans un trou fileté (10) de la zone de support (1) qui s'étend sensiblement parallèlement à l'extension des évidements (4).

3. Outil selon la revendication 1 ou 2, **caractérisé en ce que** le déplacement de la portion en forme de segment (9) lors de la rotation de la vis de serrage (6) dans le trou fileté (10) est réalisé par une zone (11) de la vis de serrage (6) qui s'élargit dans la direction de forage et/ou par une zone (12) de la portion en forme de segment (9) qui est tournée vers la vis de serrage (6) et qui se rétrécit dans la direction de forage.

4. Outil selon la revendication 3, **caractérisé en ce que** la zone (11) de la vis de serrage (6) qui s'élargit dans la direction de forage est formée par une tête (13) de la vis de serrage (6) qui présente un contour extérieur conique.

5. Outil selon l'une des revendications 1 à 4, **caractérisé en ce qu'**un renfoncement (14) qui part de la face frontale (2) et dont l'extension dans la direction de rotation (R) est supérieure à la distance entre la vis de serrage (6) et la surface de serrage (8) se raccorde à l'évidement (4) sur un côté opposé à la surface de butée rigide (7).

6. Outil selon la revendication 5, **caractérisé en ce que** la profondeur (T) du renfoncement (14) mesurée à partir de la face frontale (2) entre l'évidement (4) et la vis de serrage (6) augmente dans la direction de rotation (R).

7. Outil selon l'une des revendications 1 à 6, **caractérisé en ce que** la zone de support (1) est réalisée en forme de tube, la face frontale (2) étant formée par la zone d'extrémité de la zone de support (1) opposée à la zone de raccord (3).

8. Outil selon l'une des revendications 1 à 7, **caractérisé en ce que** la zone de support (1) comporte au moins une ouverture (15) qui traverse la zone de support (1) et qui, par rapport à une direction sensiblement perpendiculaire à la direction de rotation (R), est disposée derrière au moins un évidement (4).

9. Outil selon la revendication 8, **caractérisé en ce que** l'ouverture (15) est formée par une fente longitudinale qui se raccorde directement à l'évidement (4) et dont l'extension dans la direction de rotation (R) est inférieure à l'extension de l'évidement (4).

10. Outil selon l'une des revendications 1 à 6, **caractérisé en ce que** la zone de support (1) est réalisée en forme de disque, la face frontale (2) étant formée par le contour extérieur circulaire de la zone de support (1).
